# EUROPÄISCHE PATENTSCHRIFT

(11) **EP 1 277 972 B1**
(45) Veröffentlichungstag und Bekanntmachung des Hinweises auf die Patenterteilung: **10.11.2004**
(21) Anmeldenummer: 02405571.7
(22) Anmeldetag: 08.07.2002
(51) Int. Cl.: F16B 13/06, F16B 37/08

(54) **Spreizdübel**
Expansion dowel
Cheville à expansion

(30) Priorität: 17.07.2001 DE 10134604
(43) Veröffentlichungstag der Anmeldung: 22.01.2003
(73) Patentinhaber: HILTI Aktiengesellschaft, 9494 Schaan (LI)
(72) Erfinder: Bisping, Heinz, 86163 Augsburg (DE); Kölbl, Alois, 86807 Buchloe (DE); Wieser, Jürgen, 86916 Kaufering (DE); Zimmerer, Claudia, 86153 Augsburg (DE)
(74) Vertreter: Wildi, Roland

(56) Entgegenhaltungen:
- DE-U- 7 538 457
- US-A- 2 955 504
- US-A- 3 172 603
- US-A- 4 930 961

## Beschreibung

Die Erfindung betrifft ein Befestigungselement nach Art eines Spreizdübels mit einer zylindrischen, vom setzrichtungsseitigen Ende her wenigstens teilweise längsgeschlitzten, Spreizhülse, die eine Durchgangsbohrung aufweist, und mit einem in die Durchgangsbohrung einziehbaren, eine sich in Setzrichtung erweiternden Aussenkontur aufweisenden, Spreizkörper, der eine Bohrung mit einem Innengewinde aufweist.

Befestigungselemente der genannten Art werden in verschiedensten Anwendungen verwendet, beispielsweise als Segmentanker in einem betonierten Bauteil. Das Befestigungselement wird in ein, in das Bauteil erstelltes, Bohrloch eingeführt. Als Lastangriffsmittel dient beispielsweise ein mit dem Spreizkörper verbundener Bolzen mit einer Aussenprofilierung. Eine entgegen der Setzrichtung wirkende Last bewirkt, dass der Spreizkörper in die Spreizhülse gezogen wird und diese sich dadurch radial aufweitet. Damit erfolgt eine Verspreizung der Spreizhülse im Bohrloch.

Aus der US 2 955 504 ist ein Befestigungselement mit einem in eine Spreizhülse einziehbaren Spreizkörper bekannt. Der Spreizkörper weist eine mit einem Innengewinde versehene Bohrung auf, die mit einer, als Lastangriffsmittel wirkenden, Schraube zusammenwirkt.

Vorteilhaft an dem bekannten Befestigungselement ist, dass die Ausbildung des Lastangriffsmittels und des Befestigungsmittels eine Vormontage auf eine einfache Art und Weise gewährleisten, da das als Schraube ausgebildete Lastangriffsmittel in Setzrichtung durch die Spreizhülse geführt wird und am setzrichtungsseitigen Ende der Schraube der Spreizkörper aufgeschraubt wird.

Nachteilig an dem bekannten Befestigungsmittel ist, dass bei der Vormontage das Lastangriffsmittel in das Innengewinde des Spreizkörpers eingeschraubt werden muss. Dies bedingt einerseits einen hohen Zeitaufwand und bedingt andererseits ein einwandfrei abgelängtes Lastangriffsmittel, da sich ansonsten ein Einschrauben des Lastangriffsmittels in das Innengewinde sehr schwierig oder gar unmöglich gestaltet.

Der vorliegenden Erfindung liegt die Aufgabe zugrunde, ein Befestigungselement mit einer durch einen Spreizkörper spreizbaren Spreizhülse zu schaffen, das sowohl eine handliche Vormontage sicherstellt sowie auch wirtschaftlich in der Herstellung ist.

Erfindungsgemäss wird die Aufgabe dadurch gelöst, dass der Spreizkörper aus zumindest zwei Körpersegmenten besteht.

Dadurch, dass der Spreizkörper aus mehreren Körpersegmenten besteht, ist eine äusserst einfache Vormontage des Befestigungselements sichergestellt, da diese durch einfaches Zusammenfügen der Körpersegmente an der gewünschten Stelle am Lastangriffsmittel vormontiert wird. Dadurch ist die Vormontage im wesentlichen unabhängig vom Zustand der Aussenkontur des Lastangriffsmittels, und somit entfällt beispielsweise ein zeitaufwändiges Aufschrauben des Spreizkörpers an das Lastangriffsmittel.

Vorteilhafterweise sind benachbarte Körpersegmente durch Gelenke miteinander verbunden, um ein Verlieren eines oder mehrerer Körpersegmente des Spreizkörpers zu verhindern. Ferner erhöht sich durch die Verwendung von Gelenken die Handlichkeit des Befestigungselements bei der Vormontage am Lastangriffsmittel. Insbesondere wenn beispielsweise alle benachbarten Körpersegmente miteinander durch Gelenke verbunden sind ergibt sich dadurch ein Verhalten, das einer einteiligen Ausbildung des Spreizkörpers gleichkommt.

Bei einer weiteren bevorzugten Ausführung ist zumindest ein Körpersegment mit einem benachbarten Körpersegment durch eine Verbindungsvorrichtung verbindbar, damit der durch die einzelnen Körpersegmente gebildete Spreizkörper am Lastangriffsmittel, vorteilhafterweise lösbar, festlegbar ist.

Die Spreizhülse ist vorzugsweise in zumindest zwei Spreizsegmente geteilt, um eine einfache und damit handliche Vormontage zu gewährleisten.

Vorteilhafterweise sind benachbarte Spreizsegmente durch Gelenke miteinander verbunden, um damit eine einfache Vormontage der Spreizhülse am Lastangriffsmittel sicherzustellen.

Vorzugsweise ist zumindest ein Spreizsegment mit einem benachbarten Spreizsegment durch eine Verbindungsvorrichtung verbindbar, damit die durch die einzelnen Spreizsegmente gebildete Spreizhülse am Lastangriffsmittels festlegbar ist.

Vorteilhafterweise besteht die Spreizhülse aus Metall, das zumindest teilweise mit einem Kunststoff umspritzt ist.

Der Spreizkörper besteht vorteilhafterweise aus Metall, das zumindest teilweise mit einem Kunststoff umspritzt ist, um eine einfache Anformung von zusätzlichen Elementen, wie beispielweise der Verbindungsvorrichtung zu gewährleisten.

Die Erfindung wird nachstehend anhand eines Ausführungsbeispieles näher erläutert. Es zeigen:
- Fig. 1: eine perspektivische Ansicht des erfindungsgemässen Befestigungselementes im auseinandergeklappten Zustand,
- Fig. 2: eine perspektivische Ansicht des in Fig. 1 dargestellten Befestigungselementes, im zusammengeklappten Zustand,
- Fig. 3: einen Längsschnitt des in Fig. 1 dargestellten Befestigungselementes, im gesetzten Zustand, mit einem eingeführten Lastangriffsmittel.

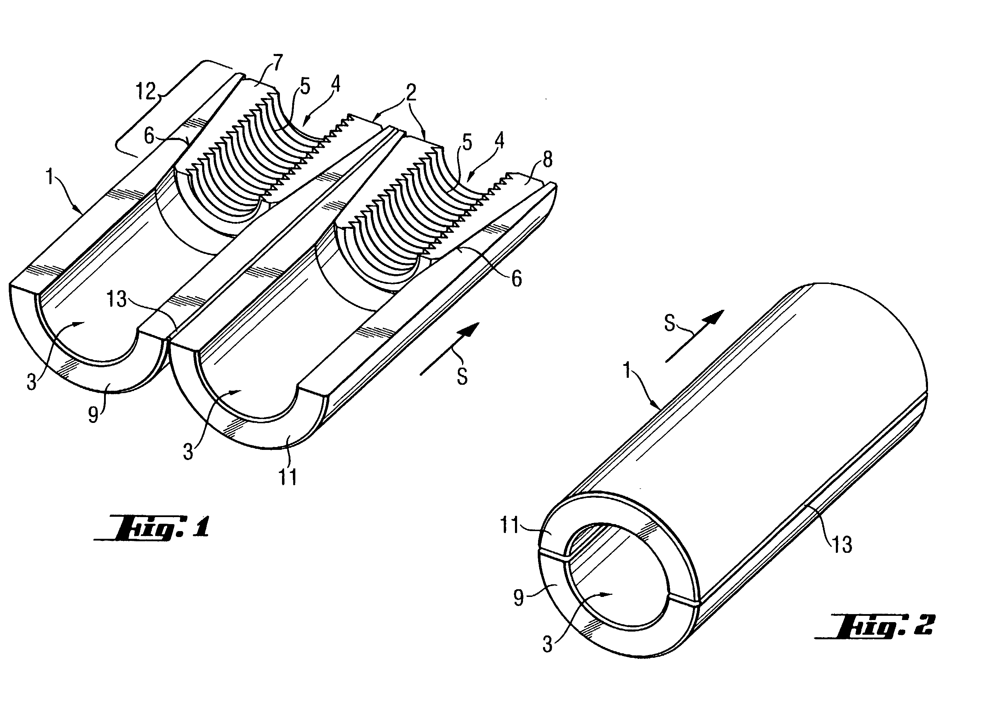

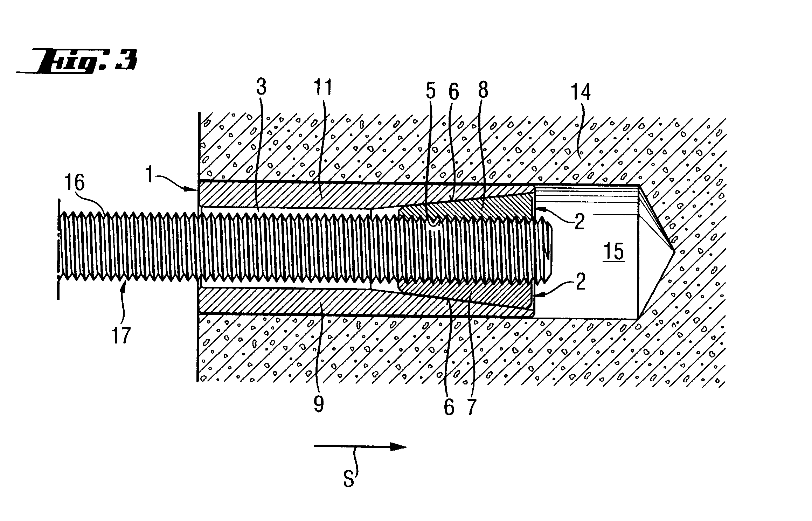

In den Fig. 1 bis 3 ist ein erfindungsgemässes Befestigungsmittel mit einer zylindrischen, vom setzrichtungsseitigen Ende her wenigstens teilweise längsgeschlitzten, Spreizhülse 1, die eine Durchgangsbohrung 3 aufweist, dargestellt. Die Spreizhülse 1 ist durch einen, entgegen der Setzrichtung S in die Durchgangsbohrung 3 einziehbaren, Spreizkörper 2 radial aufweitbar.

Der aus zwei Körpersegmenten 7, 8 gebildete Spreizkörper 2 weist etwa mittig eine in Setzrichtung S verlaufende Bohrung 4 auf, die mit einer Innenprofilierung, insbesondere einem Innengewinde 5, versehen ist. Ferner erweitert sich die konisch ausgebildete Aussenkontur 6 des Spreizkörpers 2 in Setzrichtung S.

Die aus zwei Spreizsegmenten 9, 11 gebildete Spreizhülse 1 weist im setzrichtungsseitigen Endbereich der Durchgangsbohrung 3 einen Aufnahmebereich 12 mit einer konischen, komplementär zur Aussenkontur des Spreizkörpers 2 ausgebildeten, Innenkontur auf, die sich in Setzrichtung S erweitert. Im Aufnahmebereich 12 der Spreizhülse 1 ist der Spreizkörper 2 axial verschieblich gelagert. Der Spreizkörper 2 ist beispielweise durch eine, nicht dargestellte, Sollbruchstelle mit der Spreizhülse 1 lösbar verbunden. Die beiden Spreizsegmente 9, 11 sind durch ein Gelenk 13, das beispielsweise plastisch ausgebildet ist, miteinander verbunden. Ferner sind die beiden Spreizsegmente 9, 11 durch eine, aus Gründen der Übersichtlichkeit nicht dargestellte, Verbindungsvorrichtung miteinander verbindbar. Die Verbindungsvorrichtung ist beispielsweise als Schnappverschluss ausgebildet.

Die Spreizhülse 1 ist aus Metall gefertigt, das zumindest teilweise mit einem Kunststoff umspritzt ist. Der Spreizkörper 2 ist beispielweise aus Metall, Kunststoff oder Metall, das zumindest teilweise mit einem Kunststoff umspritzt ist.

In Fig. 3 ist das erfindungsgemässe Befestigungselement in einem, in einem Untergrund 14 erstelltes, Bohrloch 15 im gesetzten Zustand dargestellt. Ein, mit einer Aussenprofilierung 16 versehener, Bolzen 17 dient als Lastangriffsmittel. Der Bolzen 17 greift mit seiner Aussenprofilierung 16 formschlüssig in das Innengewinde 5 des Spreizkörpers 2. Eine entgegen der Setzrichtung S wirkende und am Bolzen 17 angreifende Last, führt zu einer Verschiebung des im Aufnahmebereich 12 der Durchgangsbohrung 3 gelagerten Spreizkörpers 2 entgegen der Setzrichtung S und somit zu einem radialen Aufweiten der Spreizhülse 1. Damit ist das Befestigungselement durch die Spreizhülse 1 reibschlüssig im Untergrund 14, insbesondere im Bohrloch 15, verankert.

## Patentansprüche

1. Befestigungselement mit einer zylindrischen, vom setzrichtungsseitigen Ende her wenigstens teilweise längsgeschlitzten, Spreizhülse (1), die eine Durchgangsbohrung (3) aufweist, und mit einem in die Durchgangsbohrung (3) einziehbaren, eine sich in Setzrichtung (S) erweiternden Aussenkontur aufweisenden, Spreizkörper (2), der eine Bohrung (4) mit einem Innengewinde (5) aufweist, **dadurch gekennzeichnet, dass** der Spreizkörper (2) aus zumindest zwei Körpersegmenten (7, 8) besteht.

2. Befestigungselement nach Anspruch 1, **dadurch gekennzeichnet, dass** benachbarte Körpersegmente (7, 8) durch Gelenke miteinander verbunden sind.

3. Befestigungselement nach Anspruch 1, **dadurch gekennzeichnet, dass** zumindest ein Körpersegment (7) mit einem benachbarten Körpersegment (8) durch eine Verbindungsvorrichtung verbindbar ist.

4. Befestigungselement nach einem der Ansprüche 1 bis 3, **dadurch gekennzeichnet, dass** die Spreizhülse (1) in zumindest zwei Spreizsegmente (9,11) geteilt ist.

5. Befestigungselemente nach Anspruch 4, **dadurch gekennzeichnet, dass** benachbarte Spreizsegmente (9,11) durch Gelenke (12) miteinander verbunden sind.

6. Befestigungselement nach Anspruch 4 oder 5, **dadurch gekennzeichnet, dass** zumindest ein Spreizsegment (9) mit einem benachbarten Spreizsegment (11) durch eine Verbindungsvorrichtung verbindbar ist.

7. Befestigungselement nach einem der Ansprüche 1 bis 6, **dadurch gekennzeichnet, dass** die Spreizhülse (1) aus Metall, das zumindest teilweise mit einem Kunststoff umspritzt ist, besteht.

8. Befestigungselement nach einem der Ansprüche 1 bis 7, **dadurch gekennzeichnet, dass** die Spreizkörper (2) aus Metall, das zumindest teilweise mit einem Kunststoff umspritzt ist, besteht.

## Claims

1. Fixing element with a cylindrical expansion sleeve (1) which is at least partially slotted from the placement end and incorporates a through-hole (3), and with an expansion body (2) which is adapted to be drawn into the through-hole (3), features an external contour that broadens out in the direction of placement (S), and incorporates a bore (4) with an internal thread (5), **characterised in that** the expansion body (2) comprises at least two body segments (7, 8).

2. Fixing element according to claim 1, **characterised in that** adjacent body segments (7, 8) are connected to one another by joints.

3. Fixing element according to claim 1, **characterised in that** at least one body segment (7) is adapted to be connected to an adjacent body segment (8) by a connecting device.

4. Fixing element according to any one of claims 1 to 3, **characterised in that** the expansion sleeve (1) is divided into at least two expansion segments (9, 11).

5. Fixing element according to claim 4, **characterised in that** adjacent expansion segments (9, 11) are connected to one another by joints (12).

6. Fixing element according to claim 4 or 5, **characterised in that** at least one expansion segment (9) is adapted to be connected to an adjacent expansion segment (11) by a connecting device.

7. Fixing element according to any one of claims 1 to 6, **characterised in that** the expansion sleeve (1) is made of metal that has been at least partly encapsulated in plastic by injection moulding.

8. Fixing element according to any one of claims 1 to 7, **characterised in that** the expansion body (2) is made of metal that has been at least partly encapsulated in plastic by injection moulding.

## Revendications

1. Élément de fixation avec un manchon expansible cylindrique (1) qui est au moins en partie fendu longitudinalement à partir de l'extrémité côté direction de scellement et qui est pourvu d'un trou débouchant (3), et avec un corps d'expansion (2), lequel peut être enfoncé dans le trou débouchant (3), comporte un contour extérieur s'élargissant dans la direction de scellement (S) et est pourvu d'un trou (4) avec un taraudage (5), **caractérisé en ce que** le corps d'expansion (2) se compose d'au moins deux segments de corps (7, 8).

2. Élément de fixation selon la revendication 1, **caractérisé en ce que** des segments de corps voisins (7, 8) sont reliés entre eux par des articulations.

3. Élément de fixation selon la revendication 1, **caractérisé en ce qu'**au moins un segment de corps (7) peut être relié à un segment de corps voisin (8) par un dispositif de liaison.

4. Élément de fixation selon une des revendications 1 à 3, **caractérisé en ce que** le manchon expansible (1) est divisé en au moins deux segments expansibles (9, 11).

5. Élément de fixation selon la revendication 4, **caractérisé en ce que** des segments expansibles (9, 11) sont reliés entre eux par l'intermédiaire d'articulations (12).

6. Élément de fixation selon la revendication 4 ou 5, **caractérisé en ce qu'**au moins un segment expansible (9) peut être relié à un segment expansible voisin (11) par un dispositif de liaison.

7. Élément de fixation selon une des revendications 1 à 6, **caractérisé en ce que** le manchon expansible (1) est constitué de métal au moins partiellement enrobé de matière plastique.

8. Élément de fixation selon une des revendications 1 à 7 **caractérisé en ce que** le corps d'expansion (2) est constitué de métal au moins partiellement enrobé de matière plastique.
